# EUROPÄISCHE PATENTANMELDUNG

(11) **EP 2 596 926 A2**
(43) Veröffentlichungstag der Anmeldung: **29.05.2013**
(21) Anmeldenummer: 10196847.7
(22) Anmeldetag: 23.12.2010
(51) Int. Cl.: B27L 1/08

(54) **Lochrotorentrindungsmaschine**

(30) Priorität: 18.12.2009 DE 202009014887 U
(71) Anmelder: Wiedemann, Josef, 95367 Trebgast (DE)
(72) Erfinder: Wiedemann, Josef, 95367 Trebgast (DE)
(74) Vertreter: Pröll, Jürgen

(57) **Zusammenfassung**

Die Erfindung betrifft eine Lochrotorentrindungsmaschine mit einem Rotor (1) mit einem zentrischen Durchgangsloch (2) zum Durchführen des zu entrindenden Baumstammes (3, 4) und einem Außenring (5) mit einer Spanneinrichtung für Messerwerkzeuge (6), wobei an dem Außenring (5) mindestens ein tangential in Richtung des Baumstammes verschwenkbar gelagerter Messerarm (7) angelenkt ist, an dessen vorderem Ende an einem Messerhalter (12) mindestens ein Messer (8) montiert ist und auf den mindestens ein Hilfsmittel (9) zum Erzeugen des notwendigen Messerdruckes gegen den Baumstamm (3, 4) wirkt. Das Hilfsmittel (9) ist in geeigneter Weise am Messerarm (7) beabstandet zur Drehachse einerseits und am Außenring (5) andererseits angebracht und übt eine Schub- oder Zugkraftkomponente aus, wobei die Anlagekraft des Messers (8) am Baumstamm (3, 4) durch dieses Hilfsmittel (9) ausschließlich oder zusätzlich zu einem an einem rückseitig die Drehachse überstehenden Überstand des Messerarms befestigten Fliehkraftgewicht bestimmt ist.

## Beschreibung

Die Erfindung betrifft eine Lochrotorentrindungsmaschine mit einem Rotor mit einem zentrischen Durchgangsloch zum Durchführen des zu entrindenden Baumstammes und einem Außenring mit einer Spanneinrichtung für Messerwerkzeuge, wobei an dem Außenring mindestens ein tangential in Richtung des Baumstammes verschwenkbar gelagerter Messerarm angelenkt ist, an dessen vorderem Ende an einem Messerhalter mindestens ein Messer montiert ist und auf den mindestens ein Hilfsmittel zum Erzeugen des notwendigen Messerdruckes gegen den Baumstamm wirkt.

Eine Lochrotorentrindungsmaschine der gattungsgemäßen Art ist aus der DE 20 2008 022 401 U1 bekannt. In der Schrift ist auch ein Messerhalter einer Anordnung aus mehreren Messerhaltern an dem Rotor beschrieben, der verschwenkbar angeordnet ist. Jeder Messerhalter ist hakenförmig ausgebildet und weist einen planparallelen Abschnitt mit Bohrungen auf einer Umfangsbahn und eine zentrische Lagerbohrung auf. Mit dieser Bohrung wird der Messerhalter auf ein Schwenklager an dem Rotor aufgesetzt und daran mittels Schrauben befestigt. Der schwenkbare Messerhalter ist stets durch Krafteinwirkung so ausgerichtet, dass er in das Zentrum des Rotors schwenkt, so dass Baumstämme mit unterschiedlichen Durchmessern auch von diesen erfasst werden können. Der Messerhalter weist an seinem äußeren, der Mitte des Rotors zugewandten Ende einen Halter mit einer Aufnahme für ein Messer auf. Dieses Messer liegt mit der Schneidkante an der Rinde des Baumstammes an und zieht die Rinde beim Drehen des Rotors ab. Um ein ungehindertes Einlaufen des Baumstammes in den Rotor zu ermöglichen, ist ein Ableitblech an dem Messerhalter vorgesehen, das sich bis in den Halteteil erstreckt und seitlich angeschweißt ist. Dieses Blech steht senkrecht aus der Ebene des Messerhalters mit seinem zweiten Abschnitt und einem planparallelen ersten Abschnitt hervor. Das Ableitblech weist eine über die Messerbreite hinausgehende Breite auf, so dass die Späne hierüber abgeleitet werden können. Dieses Blech weist ebenfalls eine Auflaufschräge auf, gegen die der einlaufende Baumstamm fährt und die über die Kanten der Messerhalter nach oben bzw. bei untenseitiger Anordnung nach untern automatisch verschwenkt. Durch die Auflaufschräge ist sichergestellt, dass selbst bei noch nicht ausgestellten Messerhaltern zur Aufnahme eines größeren Baumstammes ein sicheres Aufschwenken gegeben ist. Damit ein gedämpftes Einschwenken beim Auslaufen des Stammes gegeben ist, ist weiterhin der Messerhalter mit einem abgewinkelten unteren Abschnitt versehen, der zusammen mit der Aufgleitschräge eine V-Form bildet. Es hat sich gezeigt, dass der Messerarm und die Lagerung des Messers schweren Belastungen nicht standhalten.

Aus der EP 1 704 974 B1 ist eine Anordnung von Messerwerkzeugen in einer Lochrotorentrindungsmaschine bekannt, bei der an der einen Seite des Lochrotors sich die Messeranordnung mit dem Messerarm befindet und an der anderen Seite ein Gegengewicht, das als Fliehkraftgewicht vorgesehen ist, so dass unter Ausnutzung der Fliehkraft der Andruck der Messerschneide an dem Baumstamm erfolgt. Aus der Schrift ist es ferner bekannt, an den Gegengewichten weitere elastische Hilfsmittel, insbesondere Gummibänder, Federn und Hydraulikkomponenten mit geringer Spannkraft anzubringen, die sich bei rotierendem Rotor über die auf das Gegengewicht einwirkenden Zentrifugalkräfte mit Energie aufladen und diese zum Öffnen der Messerwerkzeuge bei Drehzahlabfall und Stillstand des Rotors abgeben, wobei das Gegengewicht um die Zugkraftkomponente des elastischen Hilfsmittels schwerer gewählt ist, damit das elastische Hilfsmittel über das Gegengewicht bei rotierendem Rotor mit der notwendigen Zentripetalkraft aufladbar ist, und die Hilfsmittel bei offenem Messer leicht vorgespannt sind. Es hat sich gezeigt, dass die einzelnen Messerwerkzeuge mit ihren Lagerungen, den Gegengewichten und dergleichen außerordentlich schwer sind, so dass der Rotor insgesamt sehr schwer ist und für das Abschälen erhöhte Energie notwendig ist.

Ausgehend von dem beschriebenen Stand der Technik liegt der Erfindung die Aufgabe zugrunde, eine Lochrotorentrindungsmaschine der gattungsgemäßen Art weiterzubilden, und zwar derart, dass die Messerwerkzeuge und deren Lagerungen wesentlich leichter ausgebildet werden können. In weiterer Ausgestaltung soll sichergestellt sein, dass der Anstellwinkel des Messers sowohl bei Baumstämmen mit geringem Durchmesser als auch bei Baumstämmen mit größerem Durchmesser in eine optimale Position automatisch verbringbar ist, um bei Drehung des Rotors die Baumrinde gleichmäßiger abziehen zu können. Ferner soll der Messerdruck vorgebbar sein und der Messerarm bei leichter Ausführung dennoch stabil und verwindungssteif sein.

Die erste Teilaufgabe löst die Erfindung durch Ausgestaltung der Lochrotorentrindungsmaschine gemäß der im Anspruch 1 angegebenen technischen Lehre.

Die zweite Teilaufgabe wird durch die Lehre des Anspruches 8 in Kombination mit der Lehre des Anspruches 1 gelöst.

Die dritte Teilaufgabe wird durch die Lehre des Anspruches 1 in Kombination der Ausgestaltung des Messerarms gemäß der Lehre des Anspruches 5 gelöst.

Vorteilhafte Weiterbildungen der Erfindung sind in der Unteransprüchen im Detail angegeben.

Nach der Erfindung ist das Hilfsmittel in geeigneter Weise am Messerarm beabstandet zur Drehachse einerseits und am Außenring andererseits angebracht und übt eine Schub- oder Zugkraftkomponente aus, wobei die Anlagekraft des Messers am Baumstamm durch dieses Hilfsmittel ausschließlich oder zusätzlich zu einem an einem rückseitig die Drehachse überstehenden Überstand des Messerarms befestigten Fliehkraftgewicht bestimmt ist.

Als Hilfsmittel können Gummibänder, Federn oder Hydraulikkomponenten vorgesehen sein. Als Hydraulikkomponente kann ein Hydraulikzylinder mit ausfahrbarem Stößel vorgesehen sein, wobei der Stößel im vorderen Bereich des Messerarms an einem Seitenteil oder an einem Lagerbolzen hieran oder zwischen zwei Seitenteilen und der Zylinder an einem Lagerbolzen an dem Außenring angelenkt sind.

Zur direkten Betätigung können an dem Außenring Hydraulikreservoire vorgesehen und diese direkt mit den als Hilfsmittel vorgesehenen Hydraulikzylindern der Hydraulikkomponenten verbunden sein.

Durch die erfindungsgemäße Anordnung der Hilfsmittel, z.B. der Hydraulikkomponente, die direkt auf den Messerarm bzw. auf die Anordnung insgesamt wirkt, wird eine leichtere Bauausführung der Messeranordnung und damit eine wesentliche Gewichtsreduzierung möglich. Eine solche Hydraulikkomponente kann auch durch andere Hilfsmittel, beispielsweise Gummibänder oder Federn, ersetzt werden. Die Hydraulikkomponente ist dabei drehbeweglich an dem Außenring und mit dem anderen Ende an bzw. zwischen den beiden Seitenteilen des Messerarmes gelagert, wenn dieser Seitenteile aufweist. Es kann auch eine Messeranordnung zur Anwendung kommen, wie sie in der DE 20 2008 022 401 U1 beschrieben ist. Der Stelldruck der Anordnung kann beispielsweise durch Druckbeaufschlagung mit Hydraulikflüssigkeit von einem oder mehreren Hydraulikreservoiren bewirkt werden, die einzeln oder gemeinsam mit den Hydraulikzylindern gekoppelt und mit Ventilen ausgestattet sind und an bzw. in Ausnehmungen des Außenringes eingesetzt sind. Ebenso kann der Schwenkweg eines solchen Hilfsmittels, wie eine Hydraulikkomponente, durch einen Lagerzapfen, der in einer bogenförmigen Leitkurve in dem Außenring um das Drehlager am Außenring angeordnet ist, begrenzt werden. Anstelle des Lagerzapfens oder über einen Lagerzapfen kann auch die Verbindung mit dem oder den Reservoiren hergestellt werden. Im Falle der zuvor beschriebenen Nutzung der Leitkurve als Schwenkwegbegrenzer kann auf den Anschlag, der über das Lager des Messerarmes hinausgehend vorgesehen ist, verzichtet werden.

In vorteilhafter Weise sind auf einem Außenring eines Rotors drei, vier, fünf oder sechs Messerarme verteilt vorgesehen, wobei deren Winkelabstände auf einer Umlaufbahn gleich groß sind. Auch können die Messer oder die Messerarme höhenversetzt angeordnet sein, so dass die einzelnen Messer in Reihe angeordnet zum Einsatz kommen und mit einem Umlauf ein größerer Rindenabtrag erfolgt. Wenn die einzelnen Messer beispielsweise zwei Zentimeter breit sind, so kann - bei entsprechendem Höhenversatz - die Rinde über eine Breite von 10 cm bei jedem Umlauf abgetragen werden. Zugleich wird der Stamm aber auch vorgeschoben, so dass ein schraubenförmiger Abtrag gegeben ist. Die Lagerzapfen weisen allesamt gleiche Längen auf, so dass der Höhenversatz z. B. durch Zwischenringe auf einfache Weise einstellbar ist.

Die Hydraulikkomponente besteht in einfachster Ausführung aus einem Hydraulikzylinder mit ausfahrbarem Stößel, wobei der Stößel an einem Seitenteil oder an einem Lagerbolzen zwischen den beiden Seitenteilen und der Zylinder an einem Lagerbolzen an dem Außenring angelenkt sind. Um eine verbesserte Ableitung der abgeschälten Rinde zu erreichen, kann darüber hinaus der Messerarm in Drehrichtung des Rotors konvex gewölbt ausgeführt sein.

Durch die in weiterer Ausgestaltung vorgesehene bauliche Ausführung des Messerarmes entsteht ein in sich stabiler U-förmiger Träger, zwischen dessen Seitenteile der Messerhalter, das Lager sowie Schutzbleche anordenbar sind und die mittels einer Lagerbuchse zusätzlich stabil miteinander verbunden sind. Die Lagerbuchse wird vorteilhafterweise mit Kugel- oder Rollenlagern bestückt, die auf Lagerzapfen an dem Außenring aufgesetzt und gegen Abzug daran gesichert gehalten werden. Wenn die Abdeckkappe, die beispielsweise durch ein Splint gesichert werden kann, entfernt wird, kann der Messerarm mitsamt dem Kugellager von den Lagerbolzen abgezogen werden. Die Ausbildung des Messerarmes ermöglicht zugleich an der gebogenen oder abgewinkelten Seite, die dem Baumstamm zugewandt ist, die Anbringung eines Ableitbleches in Schräglage, wie dies aus dem eingangs genannten Gebrauchsmuster bekannt ist. Dieses Blech verbindet zugleich auch die beiden Seitenteile und führt die abgeschälte Baumrinde ab und dient als Aufgleitfläche beim Einführen des Baumstammes in der Weise, dass die Messerarme von der Vorderkante des Baumstammes angehoben werden, bis die Messer auf der Rinde liegen. Darüber hinaus gestattet die doppelte Befestigung des Ableitbleches, dass dieses beliebig groß gewählt werden kann, um eine optimale Abführung der durch die Messer herausgetrennten Baumrinde und ein optimales Aufgleiten zu ermöglichen. Die Schräge kann dabei in einem definierten Winkel nach außen vorgesehen sein, beispielsweise in einem Winkel zwischen 10° bis 35° gegenüber der Rotationsachse der Lochrotorentrindungsmaschine. Die Bogenform oder die Abwinkelungen sind so ausgeführt, dass nur das Messer an der Rinde anliegt.

Das dem Außenring zugewandte innere Seitenteil des Messerarmes kann darüber hinaus die Abdeckung mit einem von innen nach außen größer werdenden Rand überstehen, der die Funktion der Aufgleitfläche übernimmt und beim Einfahren eines Baumstammes in die Rotoröffnung durch Entlanggleiten an der Kante des Baumstammes automatisch den Messerarm nach außen verdrängt. Durch die stabile Ausführung, nämlich durch die doppelseitige Ausführung, ist dabei sichergestellt, dass keine Verwindung des Messerhalters erfolgen kann.

Um den Schwenkweg des Messerarmes zu begrenzen, ist an dem innenseitigen Seitenteil rückseitig ein Überstand vorgesehen, der einen Anschlag aufweist, der gegen einen ortsfesten Anschlag am Außenring beim Verschwenken der Messeranordnung in Richtung des Zentrums des Rotors anschlägt, wodurch der Schwenkweg nach innen begrenzt ist und auch die kleinste Größe des Durchmessers des Baumstammes definiert ist, der mit einer solchen Lochrotorentrindungsmaschine entrindet werden kann. Der maximale Durchmesser ist vorgegeben durch den Lochdurchmesser. Der dickste Baumstamm muss also einen geringeren Durchmesser aufweisen, um in das zentrische Durchgangsloch eingeführt werden zu können. Die Einführmittel sind aus den beiden eingangs genannten Druckschriften ebenfalls bekannt und für die erfinderische Ausführungsform nicht relevant.

Eine weitere Besonderheit ist dann gegeben, wenn der Messerhalter als doppelschenkliger Hebel ausgebildet und schwenkbar zwischen den beiden Seitenteilen oder an einem Seitenteil des Hebelmesserarmes gelagert ist, wobei der eine Hebel das Messer trägt und der andere Hebel als Betätigungsarm ausgeführt ist. Beide Hebel können geradlinig ausgeführt oder aber auch als Kniehebel ausgeformt sein. Zur Bedienung des Betätigungshebels ist im Endbereich ein Drehlager zur Fixierung einer Betätigungseinrichtung, z. B. einer Stange, zum Verstellen des Neigungswinkels des Messerhalters vorgesehen. Diese Betätigungseinrichtung, die sowohl an dem Betätigungsarm angelenkt ist als auch an dem Außenring, bewirkt, dass beim Verschwenken des Messerarmes der Messerhalter ebenfalls verschwenkt wird, wodurch der Neigungswinkel des Messers - bezogen auf den Baumstamm - in einem Winkelbereich nachgeführt wird, um eine optimale Abschälung der Baumrinde zu bewirken. Um eine bogenförmige Nachführung zu erreichen, kann auch ein Kniehebel zwischen der Betätigungsstange einerseits und dem doppelschenkligen Hebel andererseits vorgesehen sein, der eine solche Bewegungstransformation bewirkt, dass der Anstellwinkel des Messers über den gesamten Schwenkbereich des Messerarmes nahezu gleich bleibt. Es kann ferner anstelle einer solchen Betätigungseinrichtung auch ein Betätigungsgetriebe aus mehreren Gliedern vorgesehen sein, das diese Ausrichtung ermöglicht.

Die Erfindung wird nachfolgend anhand der in den Zeichnungen dargestellten Beispiele ergänzend erläutert.

In der Zeichnung zeigt:
- FIG 1: eine Draufsicht auf einen Rotor mit zwei Messerwerkzeugen und insgesamt fünf Lagerzapfen, die auf einer Umfangsbahn verteilt angeordnet sind und zur Aufnahme weiterer solcher Messerwerkzeuge dienen und
- FIG 2: in vereinfachter perspektivischer Darstellung ein Messerwerkzeug nach der Erfindung.

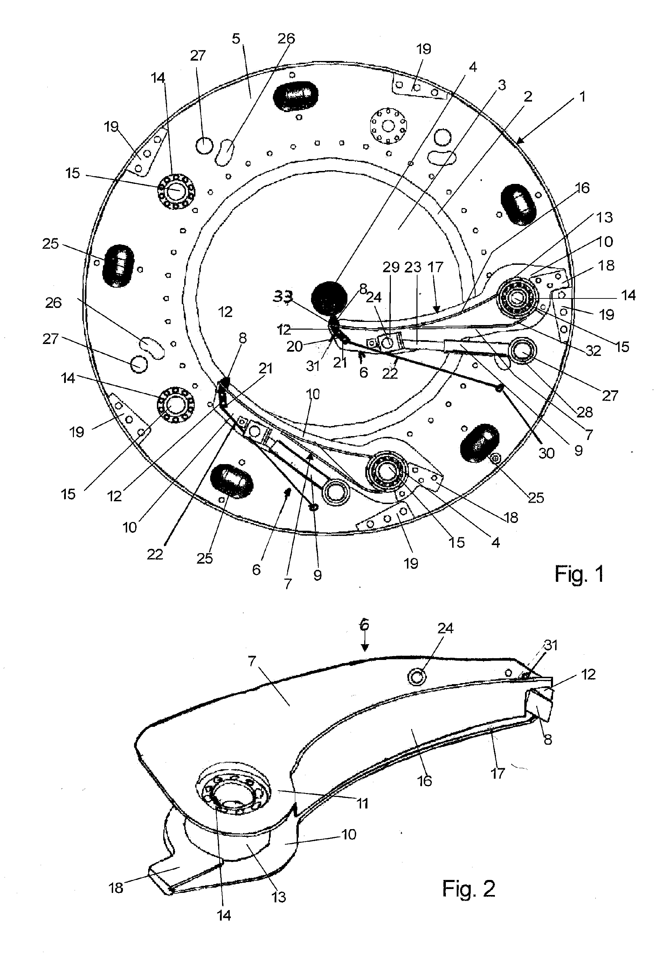

In Figur 1 ist ein Rotor 1 teilweise bestückt mit Messerwerkzeugen 6 in der Draufsicht dargestellt. Der Rotor 1 weist eine Ringstruktur auf und besteht beispielsweise aus Stahlblech. Mittig ist ein Durchgangsloch 2 vorgesehen, durch das ein Baumstamm 3 mit größerem Durchmesser oder mit einem kleineren Durchmesser 4 beim Abschälen der Rinde durchläuft. Auf dem Außenring 5 sind die Messerwerkzeuge 6 auf dem Lagerzapfen 15 montiert. Auf einer Umlaufbahn sind gleichmäßig verteilt fünf Lagerzapfen 15 vorgesehen, auf die Kugellager 14 aufgesetzt sind, die sich in Lagerbuchsen 13 der Messerwerkzeuge 6 befinden. Weiterhin sind ebenfalls verteilt auf einer Umlaufbahn fünf Hydraulikreservoire 25 an dem Außenring 5 und Anschläge 19 befestigt. Aus der Ebene der Lagerzapfen 15 stehen weitere Lagerzapfen 27 hervor, die den Lagerzapfen 15 zugeordnet sind. Um diese Lagerzapfen 27 ist jeweils eine kreissegmentförmige Leitkurve 26 angeordnet, deren Bedeutung später noch beschrieben wird. Des Weiteren zeigt Figur 1 jeweils das Seitenteil 10 des Messerwerkzeuges 6. Das obenseitige Seitenteil 11 ist abgenommen, damit die Lagerstellen sichtbar sind.

Jedes Messerwerkzeug 6 besteht, wie aus der Figur 2 ergänzend ersichtlich, aus einem untenseitigen Seitenteil 10 und einem obenseitigen Seitenteil 11, die über eine vorderseitige Abdeckung 16 oder eine Vorderwand mit aufgesetzter Abdeckung 16 miteinander verbunden sind. Die Seitenteile 10 und 11 weisen vorderseitig eine bogenförmige Struktur auf, entsprechend angepasst ist auch die Abdeckung 16, die zudem von dem Seitenteil 10 zum Seitenteil 11 hin abnehmend schräg verläuft, um hierüber eine Verdrängung der abgeschnittenen Rinde nach außen - weg von dem Rotor - zu erreichen. Beide Seitenteile 10 und 11 sind über eine Lagerbuchse 13 und über die Abdeckung 16 miteinander verbunden. Die Abdeckung 16 übersteht das Seitenteil 11. In die Lagerbuchse 13 ist jeweils mindestens ein Kugellager 14 eingesetzt, das, wie zuvor schon beschrieben, auf einen Lagerzapfen 15 an dem Rotor aufgesetzt ist. Die Lagerbuchse 13 weist untenseitig einen Überstand des Seitenteiles 10 auf, der als Anschlag 18 ausgebildet ist und mit den Anschlägen 19 an dem Außenring 5 des Rotors 1 korrespondiert. In den Seitenteilen 10 und 11 sind Lagerbohrungen für einen Lagerbolzen 24 vorgesehen, auf den schwenkbar mit einem Schwenklager 29 ein Stößel 23 eines als Hilfsmittel 9 vorgesehenen Hydraulikzylinders angelenkt ist. Der Hydraulikzylinder 9 ist mit seinem anderen Ende, wie aus Figur 1 ersichtlich, mittels einer Lagerhülse auf einen Lagerzapfen 27 an dem Außenring 5 drehbar aufgesetzt und so positioniert, dass auf dem aus den beiden Seitenteilen 10 und 11 gebildeten Messerarm 7 eine Druckkraft ausgeübt wird, die in eine Schwenkbewegung des Messerarmes 7 transformiert wird. Der Messerarm 7 wird also zwangsläufig durch das Hilfsmittel 9 stets in Richtung der Mittenachse des Rotors 1 verschwenkt.

Des Weiteren zeigt Figur 1, dass rückseitig in den Messerarm 7 ein Schutzblech 32 angeordnet ist, das darüber hinaus auch zur Stabilität des Verbundes aus den zusammengeschweißten Teilen dient. Zwischen den beiden Seitenteilen 10 und 11 ist vorderseitig ferner ein um ein Drehlager 31 verschwenkbarer Messerhalter 12 gelagert, an dem innenseitig vorstehend ein Messer 8 angebracht ist, beispielsweise angeschraubt ist, um dieses austauschen zu können. Der Messerhalter 12 besteht aus zwei Hebelarmen 33 und 20. Der Hebelarm 20 ist als Betätigungsarm ausgeführt und weist ein Drehlager 21 zur Aufnahme des anderen Endes der Betätigungsstange 22 für den Messerhalter auf. Diese Betätigungsstange 22 ist mit ihrem anderen Ende an ein Drehlager 30 an dem Außenring gelagert und so positioniert, dass der Anlagewinkel des Messers 8 an dem Baumstamm 3, 4 sich beim Verschwenken des Messerarmes 6 in gewünschter Weise leicht verändert oder konstant bleibt, um trotz relativer Verkürzung der Lagerposition mit dem Verschwenken des Messerarmes 6 eine optimale Schneidposition einnehmen zu können. Anstelle oder ergänzend zu einer Betätigungsstange 22 kann auch ein Kopplungsgetriebe oder ein Kniehebel zwischengefügt sein, um eine gewünschte Winkelverstellung des Messers mit anderem Kurvenverlauf zu erreichen.

Der Schwenkradius des Hydraulikzylinders, der als Hilfsmittel 9 hier vorgesehen ist, kann ebenfalls durch einen Zapfen begrenzt sein, der nicht dargestellt ist und in die Leitkurve 26 eingreift, die in demselben Radius gegenüber dem Lagerzapfen angebracht ist, in welchem die Leitkurve 26 angeordnet ist. Dieser Lagerzapfen kann auch ein Hydraulikanschlusszapfen sein, an dem ein Hydraulikrohr oder -schlauch befestigt ist. Die Druckmittelbeaufschlagung der Hydraulikzylinder des Hilfsmittels 9 erfolgt jeweils über die eingezeichneten Hydraulikreservoire 25, die zur Einstellung mit dem Druckmittel beaufschlagt werden.

Das Seitenteil 10 weist darüber hinaus einen gegenüber der Abdeckung 16 vorstehenden Rand 17 auf, der die Spanabfuhr begünstigt. Die schräge Ausführung der Abdeckung 16 führt zum Abdrängen der Späne nach außen, zugleich bewirkt die Schräge, dass beim Gegentreffen eines Baumstammes die Messerwerkzeuge 6 bzw. die Messerarme 7 automatisch nach außen gedrückt werden. Dieses Wirkungsprinzip ist sowohl bei kleinen Baumstämmen 4 als auch bei großen Baumstämmen 3 gewahrt. Die Arbeitsweise ist dabei die gleiche, die auch in der DE 20 2008 002 401 U1 beschrieben worden ist.

### Bezugszeichenliste

| | |
|---|---|
| 1 | Rotor |
| 2 | Durchgangsloch |
| 3 | Baumstamm |
| 4 | Baumstamm |
| 5 | Außenring |
| 6 | Messerwerkzeug |
| 7 | Messerarm |
| 8 | Messer |
| 9 | Hilfsmittel |
| 10 | Seitenteil |
| 11 | Seitenteil |
| 12 | Messerhalter |
| 13 | Lagerbuchse |
| 14 | Kugel-/Rollenlager |
| 15 | Lagerzapfen |
| 16 | Abdeckung |
| 17 | Rand |
| 18 | Anschlag |
| 19 | Anschlag |
| 20 | Hebelarm/Betätigung |
| 21 | Drehlager |
| 22 | Betätigungsstange |
| 23 | Stößel |
| 24 | Lagerbolzen |
| 25 | Hydraulikreservoire |
| 26 | Leitkurve |
| 27 | Lagerzapfen |
| 28 | Lagerhülse |
| 29 | Schwenklager |
| 30 | Drehlager |
| 31 | Drehlager |
| 32 | Schutzblech |
| 33 | Hebelarm |

## Patentansprüche

1. Lochrotorentrindungsmaschine mit einem Rotor (1) mit einem zentrischen Durchgangsloch (2) zum Durchführen des zu entrindenden Baumstammes (3, 4) und einem Außenring (5) mit einer Spanneinrichtung für Messerwerkzeuge (6), wobei an dem Außenring (5) mindestens ein tangential in Richtung des Baumstammes verschwenkbar gelagerter Messerarm (7) angelenkt ist, an dessen vorderem Ende an einem Messerhalter (12) mindestens ein Messer (8) montiert ist und auf den mindestens ein Hilfsmittel (9) zum Erzeugen des notwendigen Messerdruckes gegen den Baumstamm (3, 4) wirkt, **dadurch gekennzeichnet, dass** das Hilfsmittel (9) in geeigneter Weise am Messerarm (7) beabstandet zur Drehachse einerseits und am Außenring (5) andererseits angebracht ist und eine Schub- oder Zugkraftkomponente ausübt, wobei die Anlagekraft des Messers (8) am Baumstamm (3, 4) durch dieses Hilfsmittel (9) ausschließlich oder zusätzlich zu einem an einem rückseitig die Drehachse überstehenden Überstand des Messerarms befestigten Fliehkraftgewicht bestimmt ist.

2. Lochrotorentrindungsmaschine nach Anspruch 1, **dadurch gekennzeichnet, dass** als Hilfsmittel (9) Gummibänder, Federn oder Hydraulikkomponenten vorgesehen sind.

3. Lochrotorentrindungsmaschine nach Anspruch 2, **dadurch gekennzeichnet, dass** als Hydraulikkomponente ein Hydraulikzylinder mit ausfahrbarem Stößel (23) vorgesehen ist, wobei der Stößel (23) im vorderen Bereich des Messerarms (7) an einem Seitenteil (10, 11) oder an einem Lagerbolzen (24) angelenkt ist und der Zylinder an einem Lagerbolzen (10, 11) an dem Außenring (5).

4. Lochrotorentrindungsmaschine nach Anspruch 3, **dadurch gekennzeichnet, dass** an dem Außenring Hydraulikreservoire (25) vorgesehen sind und dass diese direkt mit den als Hilfsmittel (9) vorgesehenen Hydraulikzylindern der Hydraulikkomponenten verbunden sind.

5. Lochrotorentrindungsmaschine nach Anspruch 1, **dadurch gekennzeichnet, dass** der Messerarm (7) zwei Seitenteile (10, 11) aufweist, zwischen deren vorderen Enden der Messerhalter (12) angebracht ist und die am anderen Ende über eine Lagerbuchse (13) miteinander verbunden sind, die direkt oder mittels eingesetzter Kugel- oder Rollenlager (14) auf einen Lagerzapfen (15) an dem Außenring (5) aufsteckbar und daran abzugssicher gehalten ist, und dass die beiden Seitenteile (10, 11) an der Messerseite durch eine im definierten Winkel schräg nach außen verlaufende Abdeckung (16) miteinander verbunden sind.

6. Lochrotorentrindungsmaschine nach Anspruch 5, **dadurch gekennzeichnet, dass** das dem Außenring (5) zugeordnete innere Seitenteil (10) des Messerarmes (7) die Abdeckung mit einem von innen nach außen größer werdenden Rand (17) übersteht.

7. Lochrotorentrindungsmaschine nach Anspruch 5 oder 6, **dadurch gekennzeichnet, dass** das innere Seitenteil (10) rückseitig die Lagerbuchse (13) übersteht und einen Anschlag (18) aufweist, der gegen einen ortsfesten Anschlag (19) am Außenring (5) den Schwenkweg gegenüber dem Zentrumspunkt des Rotors (1) begrenzt.

8. Lochrotorentrindungsmaschine nach Anspruch 1 oder 5, **dadurch gekennzeichnet, dass** der Messerhalter (12) ein doppelschenkliger Hebelarm (33, 20) ist, der schwenkbar zwischen den beiden Seitenteilen (10, 11) oder an den Seitenteilen (10, 11) des Messerarms (7) gelagert ist, wobei der eine Hebel (33) das Messer (8) trägt und der andere Hebel (20) als Betätigungsarm ausgeführt ist und ein Drehlager (21) zur Fixierung einer Betätigungseinrichtung zum Verstellen des Neigungswinkels des Messerhalters (12) in Abhängigkeit vom Durchmesser des zu entrindenden Baumstammes (3, 4) aufweist.

9. Lochrotorentrindungsmaschine nach Anspruch 8, **dadurch gekennzeichnet, dass** die Betätigungseinrichtung eine Betätigungsstange (22) oder ein Betätigungsgetriebe mit einer Betätigungsstange (22) umfasst, welche Betätigungsstange (22) schwenkbar am Betätigungsarm (20) oder am Betätigungsgetriebe einerseits und schwenkbar am Außenring (5) des Rotors (1) andererseits befestigt ist.

10. Lochrotorentrindungsmaschine nach Anspruch 9, **dadurch gekennzeichnet, dass** das Betätigungsgetriebe ein Kniehebel, angeordnet zwischen Betätigungsarm (20) und Betätigungsstange (22), ist, der an dem Hebelarm (20) schwenkbar befestigt oder in Leitkurven in den Seitenteilen (10, 11) geführt ist, wobei der eine Schenkel des Kniehebels an dem Drehlager (21) des Betätigungsarms (20) und der andere an der Betätigungsstange (22) angelenkt ist.

11. Lochrotorentrindungsmaschine nach Anspruch 1, **da-durch gekennzeichnet**, dass der Messerarm (7) in Drehrichtung des Rotors (1) konvex gewölbt ausgeführt ist.

12. Lochrotorentrindungsmaschine nach Anspruch 1, **dadurch gekennzeichnet, dass** auf dem Umfang des Außenrings (5) verteilt mindestens zwei gleiche Messerwerkzeuge (6), in gleichen Winkelabständen zueinander vorgesehen sind.
